# EUROPEAN PATENT APPLICATION

(11) **EP 4 279 289 A2**
(43) Date of publication of application: **22.11.2023**
(21) Application number: 21764756.9
(22) Date of filing: 07.04.2021
(51) Int. Cl.: B42C 19/02, G06F 3/12, G06T 11/60

(54) **METHOD FOR THE PRINTING LAYOUT OF BOOKS, MAGAZINES AND THE LIKE ON PRINTED SHEETS FOR THE GRAPHIC ARTS INDUSTRY**

(30) Priority: 13.01.2021 CO 21000197
(71) Applicant: Salcedo, Rafael, Barranquilla,080001 (CO)
(72) Inventor: Salcedo, Rafael, Barranquilla,080001 (CO)
(74) Representative: Maslanka Kubik, Dorota Irena
(86) International application number: PCT/CO2021/000003
(87) International publication number: WO 2021/175345

(57) **Abstract**

The present invention is related whit the field of diverse industrial techniques, where through the bookbinding of albums, classifiers, and printed, it allows implementing processes for making books combining various operations starting from simple sheets.

In particular, the invention discloses a new method for book imposition, magazines, and similar, in print, for the graphic arts industry, that seeks to organize the book pages to be collected in sheets.

The method is characterized because it implies the structuration of a numerical matrix for the imposition of the pages on a sheet, considering the book page and printing machine size, printing by groups of sheets, and adding guiding flaps that allow better sheets identification.

## Description

### BRIEF DESCRIPTION OF THE INVENTION

The present invention refers to an imposition method of books, magazines, and similar, on printed matter, for the graphic arts industry to organize book pages to be collected in folio papers.

The method is characterized by structuring a novel numeric matrix for the imposition of pages on a sheet of paper, considering the book pages size and the printing machine, printing by groups of sheets. These sheets are collected especially, adding guide flaps, later making the respective cuts, and finally proceeding with the cover placement.

This method optimizes the book production processes for small and medium printers, reducing the collection times of the books once printed regardless of their size; since, for example, instead of collecting 100 groups of sheets from a book, in a 200-page book, 10 sheets must be lifted, or less, depending on the size of the book page and the printing machine, which represents a significant saving in book collection times.

With this novel way of placing pages on the printing machine plate, books can be picked up in up to 10 percent of the time that would usually be used in the traditional production.

### TECHNICAL FIELD

The present invention is comprised in the sector of diverse industrial techniques, where through the bookbinding of albums, classifiers, and printed matter, it allows implementing book-making processes combining diverse operations starting from simple sheets.

### BACKGROUND OF THE INVENTION

Imposition is a way to distribute the book pages or another printed publication in the sheet of the printing machine.

To carry out this process is required to determine the size of the printed sheet and the printer machine, since depending on these factors, different imposition and subsequent bookbinding methods are used.

When books and magazines are imposed, the pages are in the printing sheet in a specific way (to later fold them and that pages be consecutive), according to a plotted or model previously made and in which the fold marks, record and cutting, and additional information are defined. That directly affects the collecting process of said printed matter in graphic arts workshops and represents the most significant amount of time in the production process of a book or magazine, directly affecting delays in delivery times.

Nowadays, different types of software and devices can be found on the market to impose book pages. However, the machine costs in which said software operates are high, so they are difficult to access for small and medium-sized companies, which use conventional printing machines in which there is no possibility of the sheets being folded and cut automatically, so this process must be carried out manually, requiring investment in personnel resources and time to complete the process of bookbinding and final production of the books.

Some existing printing machines have in their internal processing, and whit a software help that allows distribution of pages over a sheet, the ability of print, rotate and cut the book pages, finishing the imposition process, this is, incorporating to the process expensive folding machines that are part of the machine that prints on a roll, but this does not happen with a usual printer that do not incorporate folding and cutting systems, and which are used by a large number of small and medium-sized printers throughout the world.

Once the sheets are printed, collecting the pages of a book in graphic arts workshops represents the most significant amount of time in the production process, directly impacting delivery times.

Following some alternatives or solutions are presented for the book imposition that belongs to the state of the technique, but that substantially differ from the present invention because they do not incorporate the substantially claimed matter:
Patent CO07066725 discloses a simplified method of collecting a book characterized by a book in half sheets (49x70 cm, and the last 90x70 cm) (16 pages at a time, in the example).

The published method in this patent allows to collect or assembling books in a different way and it allows to lift a greater number of pages at the same time, instead of lifting only two, as in the traditional method. For example: In the 14x22 cm size, 20 pages are lifted in a half-sheet machine and in the 17.5x24 cm size 16 pages are lifted on a half-sheet machine.

The published method in this patent allows to collect or assemble books in a different way, and it allows to lift more pages simultaneously, instead of lifting only two, as in the traditional method. For example: In the 14x22 cm size, 20 pages are lifted in a half-sheet machine, and in the 17.5x24 cm size, 16 pages are lifted on a half-sheet machine.

It is essential to mention that invention CO07066725 was patented by the same inventor of the current method that is desired to claim through the present patent application and that it consists of substantial and notorious differences and improvements that have been created because of the inventor business practice and experience in the arts graphic industry, among them it is evident:
- The numbering order used to structure the matrix of method CO07066725 is different, which means a significant change in the inventive level of the method.
- It implies performing a 180-degree turn.
- It does not incorporate 2 flaps.
- It does not apply to any size and number of pages.
- It does not apply to any book size.
- It does not apply to any printer size.
- It indicates that sheet by sheet is collected until the last group, thus eliminating the number of groups.
- It does not indicate if sheets are joined from the first row to the second row and so on until groups in the row are finished.
- Groups are not separated by columns
- It limits the book size.
- This method can be implemented only in ½, ¼, 1/8 of sheets to divide the groups, depending on the capacity, ½, ¼, 1/8 of sheets to make the process dividing the groups, depending on the capacity.

On the other hand, patent JP2014144563 that claims methods and systems for creating brochures, describes a printed material like brochure which has a staggering part, and which has several sheets stacked on it; it is created from two types of continuous paper in which the information is recorded in advance. The main differences of this invention with the method whose protection we request are the following:
- The numbering is entirely different.
- It does not report if it does not have a cut, or a 180-degree turn.
- The brochure is created by folding it in half and cutting the top and bottom with the folded part as the back.
- It does not indicate if it has 2 flaps instead of only one.
- It does not apply to any size and number of pages.
- The order of the numbers is not aligned with the guide at the top of the sheet.
- The numbering on each page is not numbering in sequence.
- A guillotine cut is not horizontally performed.
- Each group of sheets is not lifted without having to count them.
- The first group in the row does not join, with the second group in the row and so on until the end of the row groups.
- Columns do not separate groups
- No hot rubber is applied to place the cover.
- An adhesive is applied to the centerline in the longitudinal direction of a sheet of paper on which a multi-page image is printed.

Patent US8437014B2 discloses a paper handling system to use with a printing system with portrait format documents characterized by comprising a printed sheet handling system and method for use with narrow end to narrow end formatted pages (LPEE), for producing document sets that include: a printer for printing LPEE-formatted paired document pages on a continuous strip; a cutter that divides the LPEE printed page into two current of sheets; collect each current on separate rolls of continuous sheets; removing the current of the strip from the top of one roll, rotating the second roll 180 ° and removing the current of the strip from the bottom of the second roll; transferring each of the unwound currents of strains to a cutter that cuts each current into individual pages; and collate individual pages into correctly aligned and sequenced document sets with page numbers. This invention has the following limitations:
- It does not indicate if the numbering is entirely different.
- It does not report if it does not have a cut, or a 180-degree turn.
- It does not indicate if it has 2 flaps instead of only one.
- It does not indicate if the method applies to any size and number of pages.
- The method does not use paper folios.
- The numbering does not begin in the sheet in the cell of the first column.
- The numbering order is not aligned with the guide on the top of the sheet.
- The numbering on each page is not numbering in sequence.
- Each group of sheets is not lifted without having to count them.
- The first group in the row does not join, with the second group in the row and so on until the end of the row groups.
- Columns do not separate groups.
- This method uses paper reels.
- It operates a cut inside of the same machine that is doing the printing.

Patent US2012268792A1 presents a printing processing apparatus, a printing processing method, and a printing control program; it refers to a technology to make a printing process, bookbinding, and a design page process to provide a bound sheet pack. In addition, the invention claims the printing setting control of a printing controller that allows printing through a printing device. This intention has the following significant differences:
- The numbering is different.
- It does not report if it does not have a cut, or a 180-degree turn.
- It does not indicate if it has 2 flaps instead of only one.
- It does not indicate if the method applies to any size and number of pages.
- Each group of sheets is not lifted without having to count them.
- The first group in the row does not join, with the second group in the row and so on until the end of the row's groups.
- Columns do not separate groups.
- It is a design initially made by computer.

Patent CN102442052A describes a printing production method that comprises the following steps: dividing all the pages of a single version y two parts in sequence by grouping all the parts from the two ends of the pages to the intermediate position; then combining all the symmetrical groups from the two parts into one large group; typographical composition and printing; cut into a book size that is 4 times the size of a finished book, assemble; cut along the parallel axes of the broad borders of the book pages from the middle; and later pull out and put down on a flat wat half of the book pages stack under a top books pages stacks instead of the first page and the last page in all large book page groups in the other half of the stack of book pages, brushing to paste, fold and get four books. This invention has the following significant differences:
- It does not indicate if the numbering is entirely different.
- It does not report if it does not have a cut, or a 180-degree turn.
- It does not indicate if it has 2 flaps instead of only one.
- It does not indicate if the method applies to any size and number of pages.
- The numbering order is not aligned with the guide on the top of the sheet.
- The numbering on each page is not numbering in sequence.
- Each group of sheets is not lifted without having to count them.
- The first group in the row does not join, with the second group in the row and so on until the end of the row groups.
- Columns do not separate groups.
- No hot rubber is applied to place the cover.
- The method organizes the sheet in multiples of 4; each sheet can fit 4 pages.
- A fold is made in the guides of the sheet that is made in the design.
- The final book is glued by engraving it and not with rubber.

Patent US7777901 B2 discloses an apparatus in which an imposition is applied to organize book pages and like paper; a paper image is emitted representative of all the paper and saving method of the imposition program, what makes a computer works as an imposition apparatus when the program is incorporated and executed in the computer. This invention has the following significant differences:
- It does not indicate if the numbering is entirely different.
- It does not report if it does not have a cut, or a 180-degree turn.
- It does not indicate if it has 2 flaps instead of only one.
- It does not indicate if the method applies to any size and number of pages.
- The numbering does not begin in the sheet in the cell of the first column.
- The numbering order is not aligned with the guide on the top of the sheet.
- The numbering on each page is not numbering in sequence.
- A guillotine cut is not horizontally performed.
- Each group of sheets is not lifted without having to count them.
- The first group in the row does not join, with the second group in the row and so on until the end of the row groups.
- Columns do not separate groups
- No hot rubber is applied to place the cover.
- It is a computer program where a frame is given, and the imposition of each image goes there and then an output device prints it

Patent CN109086917A describes a type of optimal sheet-fed printing design and cuts a sheet of paper and combines the determination method; this method is aimed at various possible design modes, various alternative raw material papers, using the computer program, calculating usage is different. This invention has the following substantial differences:
- It does not indicate if the numbering is entirely different.
- It does not report if it does not have a cut, or a 180-degree turn.
- It does not indicate if it has 2 flaps instead of only one.
- It does not indicate if the method applies to any size and number of pages.
- The numbering does not begin in the sheet in the cell of the first column.
- The numbering order is not aligned with the guide on the top of the sheet.
- The numbering on each page is not numbering in sequence.
- A guillotine cut is not horizontally performed.
- Each group of sheets is not lifted without having to count them.
- The first group in the row does not join, with the second group in the row and so on until the end of the row groups.
- Columns do not separate groups
- No hot rubber is applied to place the cover.
- It uses a computer program and then folds it.
- The design of the folio (sheet) is use by a computer program, and then the folding is carried out.
- It uses a computer program and then folds it.
- A computer program uses the folio (sheet) design, and then the folding is carried out.

Patent WO0151291A2 discloses a bookbinding method, which introduces a different arrangement of pages to provide the convenience of reading to a reader. This invention has the following significant differences:
- The numbering is different.
- It does not report if it does not have a cut, or a 180-degree turn.
- It does not indicate if it has 2 flaps instead of only one.
- It does not indicate if the method applies to any size and number of pages.
- The method does not convert each sheet (folio) into a matrix with rows and columns.
- The numbering does not begin in the sheet in the cell of the first column.
- The numbering order is not aligned with the guide on the top of the sheet.
- The numbering on each page is not numbering in sequence.
- A guillotine cut is not horizontally performed.
- Each group of sheets is not lifted without having to count them.
- The first group in the row does not join, with the second group in the row and so on until the end of the row groups.
- Columns do not separate groups
- No hot rubber is applied to place the cover.
- In this method the pages are organized in such a way that even numbers are on the right page and odd numbers are on the left.

Patent WO2013062934A3 discloses a method and a system to align, feed, trim, cut, rotate, crosscut, and stack sheets, each of them which contains one or more images of discrete pages that allow better automation of the general process; or manual intervention to be reduced or null, it is necessary to generate stacks of complete books or "blocks" from a sequence or stack of printed sheets. This invention has the following substantial differences:
- The numbering is different.
- It does not report if it does not have a cut, or a 180-degree turn.
- It does not indicate if it has 2 flaps instead of only one.
- It does not indicate if the method applies to any size and number of pages.
- The method does not convert each sheet (folio) into a matrix with rows and columns.
- The numbering does not begin in the sheet in the cell of the first column.
- The numbering order is not aligned with the guide on the top of the sheet.
- The numbering on each page is not numbering in sequence.
- Each group of sheets is not lifted without having to count them.
- The first group in the row does not join, with the second group in the row and so on until the end of the row groups.
- Columns do not separate groups
- No hot rubber is applied to place the cover.
- This imposition and bookbinding method is carried out by a machine with printing devices on the front page of the book and then turn the pages with an air system and sensors.

Patent JP2005349685A discloses a type of printed brochure types and a manufacturing method that involves a printer that can print variable information on a single sheet of paper on which a variety of pages are printed using a printing method such as offset. This invention has the following significant differences:
- It does not indicate if the numbering is entirely different.
- It does not report if it does not have a cut, or a 180-degree turn.
- It does not indicate if it has 2 flaps instead of only one.
- It does not indicate if the method applies to any size and number of pages.
- The numbering order is not aligned with the guide on the top of the sheet.
- The numbering on each page is not numbering in sequence.
- Each group of sheets is not lifted without having to count them.
- A guillotine cut is not horizontally performed.
- The first group in the row does not join, with the second group in the row and so on until the end of the row groups.
- Columns do not separate groups
- No hot rubber is applied to place the cover.

Patent CN102047216A refers to a method to calculate the parameter used for digital page processing and a method for the relevant print job and carry out the composition (imposition) of pages by digital front-end. This method of calculating the pages that are part of a print job includes distributing a range of sheets to print, providing the desired imposition methods for the printing job, and calculating a set of required items for the range of sheets to print, according to the desired imposition methods. This invention has the following significant differences:
- It does not indicate if the numbering is entirely different.
- It does not report if it does not have a cut, or a 180-degree turn.
- It does not indicate if it has 2 flaps instead of only one.
- It does not indicate if the method applies to any size and number of pages.

The numbering does not begin in the sheet in the cell of the first column.
- The numbering order is not aligned with the guide on the top of the sheet.
- The first group in the row does not join, with the second group in the row and so on until the end of the row groups.
- Columns do not separate groups
- No hot rubber is applied to place the cover.

### DETAILED DESCRIPTION OF THE INVENTION

The present invention refers to a novel method for booking imposition, magazine and similar, printed, for the graphic arts industries, which seeks to organize the pages of a book to be collected in sheets/folios.

The method is characterized because it involves a numerical structuration matrix for the book pages imposition on a sheet and the incorporation of flaps, depending on the paper and the printer size, printing in groups of sheets. Finally, these groups of sheets are collected, and subsequently, the respective cuts are made to proceed with the gumming and placement of the cover.

This method optimizes the production process of small and medium printed books, reducing the collecting times of the books, once printed; given that, for instance, instead of collecting 100 groups of sheets from a book, in the case of a book of 200 pages, 10 sheets/folios or less must be lifted, depending on the book and the printing machine size, which represents a significant saving in book delivery times. Furthermore, with this way of placing the pages in the printing machine, books can be picked up to 10 percent of the time.

This method does not imply or entail the acquisition of additional machinery to that traditionally used; significantly reduces the time that is used to collect a book from the traditional methos, since instead of lift 2 pages at once, 8, 10, 12, 16, 20 or more are lifted depending in the book size, which means a gain in physical and human resources, time, and space.

Given the size of the sheets/folios that will be lifted to join the pages, barely would be lifted 2 pages from the same stack, which minimizes errors.

Another error that minimizes is the inverted sheets, doubles. Since joining the sheets/folios, the operator verifies the proper location of the sheets and given so that half-sheets/folios and quarters intercalate, resulting in almost impossible to place them inverted or repeated.

If a blank sheet is presented, it is easy for the operator to notice it and remove it, thus preventing the book from containing blank pages when they should have been printed.

Additionally, the claimed method's advantages are that no qualified labor is required for its implementation.

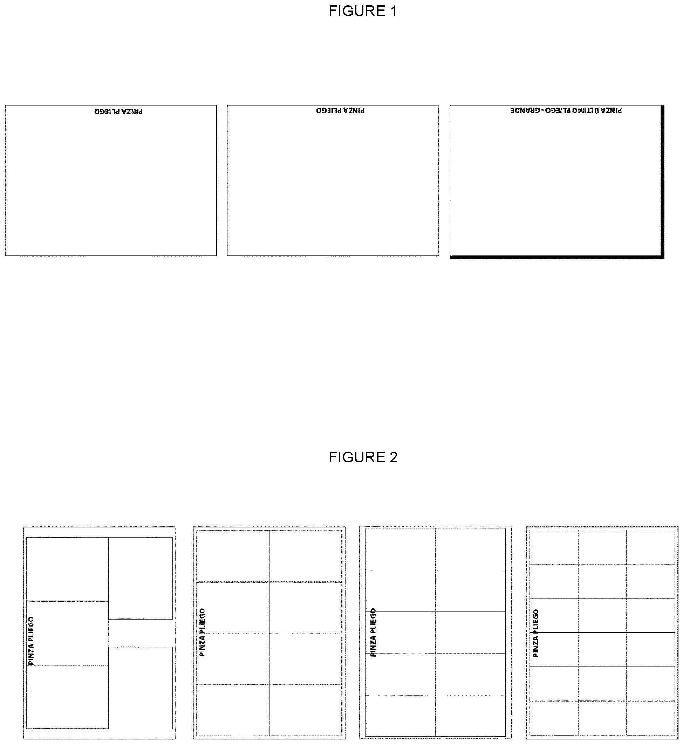

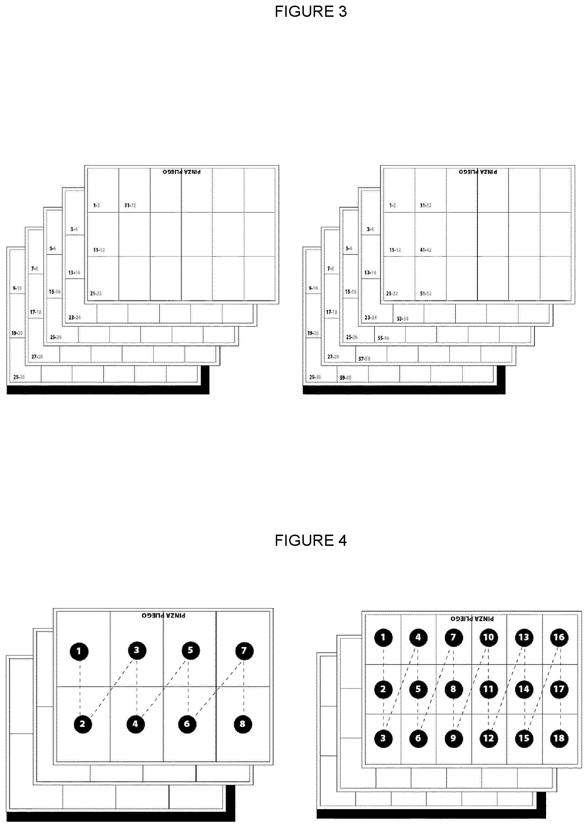

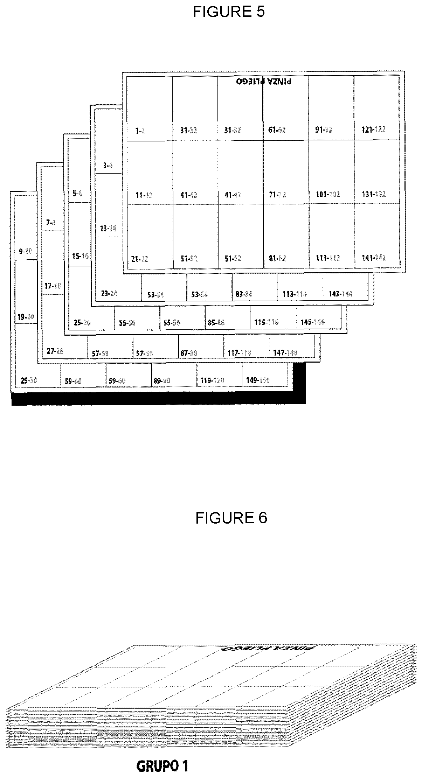

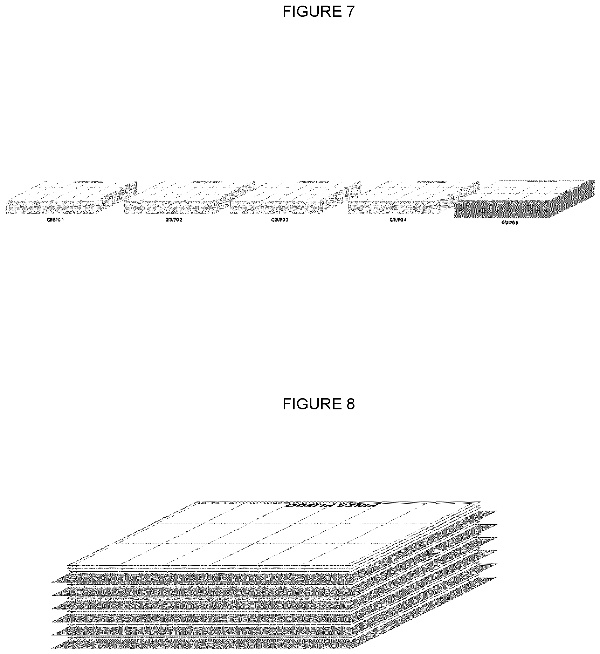

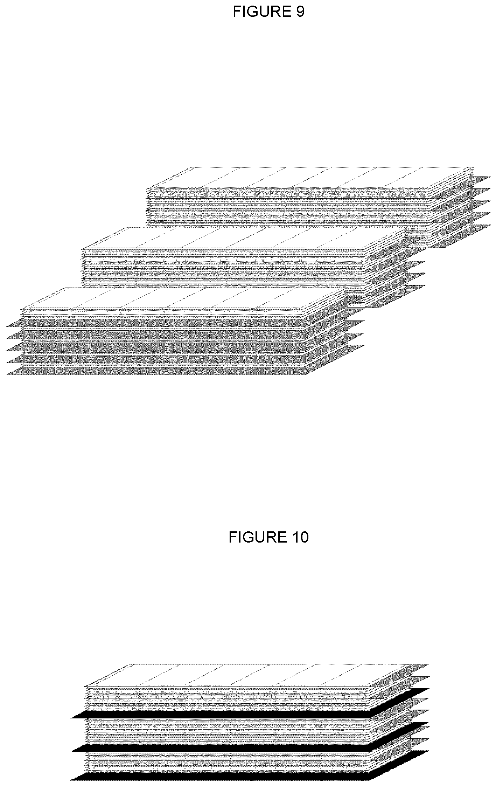

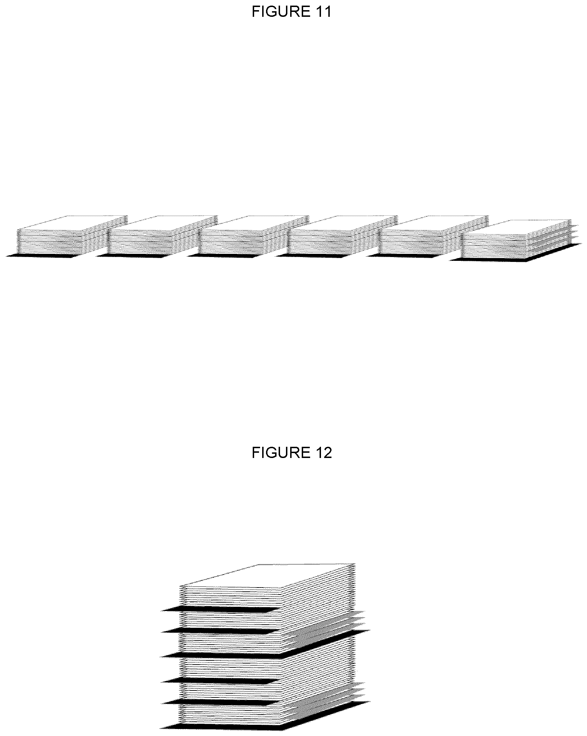

Following are described in detail the steps that allow to carry out the imposition method on printings for the graphic arts industry in the preferred application of the intention; this is not restrictive since it can be applied to different positions:
**1. Printing capacity definition:** In this step must be established how many pages is the printer machine able to print at the same time; for this, the size of the machine and the size of the book page must be determined.
**2. Determination of the number of sheets/folios that hast to be printed to produce the book:** Once the capacity and the total number of pages of the book have been previously defined, the number of pages of the book is divided by the capacity, and as a result, the number of sheets to be printed is obtained.
**3. Preparation of the model** (FIG. 2): A model is assembled with the number of sheets required to print the book. When making the model, all the scale sheets being worked with are the same size, except for the last sheet that will carry at least an additional 1 cm in width and height (FIG. 1). This excess is identified as "flaps" and allows us to identify which is the last sheet since, as can be seen, it is larger than the rest of the sheets (FIG 1). Next, it is necessary to consider the machine's gripper, which must be indicated at the model's top. The gripper is a registration that will serve as a basis for the image of the sheets to be in the same place, no matter what sheet it is, this guarantees that the image of each book (graphic box) can be seen as one when viewing the texts or figures against the light.
**4. Structuring the numerical matrix in the model** (FIG. 3, 4, and 5): In this step, each sheet of the model must be organized in a matrix with columns and rows depending on how many pages fit in the printing machine (capacity); for this, the numbering must be started on the first sheet in the cell of the first column and first row, taking into account that the order of the numbers must be aligned with the guide, which is at the top of the sheet; also, on the back, the numbers that go on the back of the page should appear. Then, it must continue with the numbering in the same cell, but in the second sheet, until the sheets are spent; once this numbering of the sheets is completed, the consecutive numbering is continued in the first sheet in the cell of the first column located in the second row. This process is repeated until the last sheet is reached; all the numbers are spent until the first column cells are finished.
   Once the cells of the first row are spent, in all the sheets, it has to proceed in the same way with the cell of the second column, first row, and it continues in that same cell, sheet after sheet until all the sheets are exhausted in the sequence shown (FIG. 3); it continues until reaching the cell corresponding to the last column, last row; that is, the las number it has to be in most extensive sheet, last cell. That is the order in which the pages should be printed.
   The matrix structuration does not have limits of columns or rows, and their assignation only depends on the size of the selected capacity.
**5. First sheet printing** (FIG. 6): The first sheet is printed. If they were, as an example, a 1.000 book, should be printed, preferably, 1.050 sheets, anticipating faulty o spotted pages (this is known as maculature).
**6. Location of the first group of sheets** (FIG. 6): That first pack of sheets is located on a table or flat surface, with page 1 in the left top angle.
**7. Second sheet printing:** The second sheet is printed. Again, and following the same example, preferably 1.050 sheets.
**8. Location of all groups of sheets** (FIG. 7): These sheets are located on a table or flat surface, considering the machine registration.
**9. Sheets collection** (FIG. 8): Once correctly printed and located all the sheets, the operator begins to lift the sheets and places them one on top of the other at the end of the table in a square, considering the machine registration. As the last sheet is larger and equipped with protruding flaps (FIG. 1), it is possible to identify where the sheets of each of the books or magazines, or material that is being printed, end.
**10. First sheets cut making** (FIG. 9): Once all the sheets have been collected, they are taken to the guillotine, considering the machine registration, where they are cut horizontally. A cut will separate the sheet, thus leaving the rows of pages.
**11. Joining the cut rows** (FIG. 10): The rows of pages already cut must be joined, taking care of the established order in the numerical matrix. The right flap serves as a guide that allows lifting the groups without counting them or seeing the image to know that the group of sheets is complete, which minimizes errors and saves time.
   The first group and the first line are joined, consecutively with the first row of the second group, and so on, until the end of the row group.
**12. Second cut making** (FIG. 11): In this step, the material is taken back to the guillotine to separate the sheets by columns. Again, the respective flap is identified to know where the book ends (FIG. 1). This time it is the bottom flap. Thanks to this flap's arrangement, the pages have not counted, or the images are seen. Just locate the bottom flap, and that is where the book ends.
**13. Book formation and final refining** (FIG. 12): Once the groups of pages are separated, they join to form a book. Next, the books are taken to the book gluing machine that applies hot glue to hold the books and receives the cover of each book. Finally, the book packages go back to the guillotine to make the final cut or trim. (FIG. 13 and 14).

Books are ready to pack, after the last quality control check.

Based on the above, this model is proposed as a viable, practical, and economical solution for small and medium graphic arts companies to optimize the collection and assembly times of books, brochures, and magazines by up to 90 percent.

### FIGURES

Figure 1. Example view of the sheets to scale, where the last sheet preferably has an additional 1 cm as flaps.
Figure 2. Example view of the model sheets made up of a matrix with columns and rows.
Figure 3. Example of the initial matrix numbering scheme and its sequence.
Figure 4. Examples of the numbering scheme applied to different capacities.
Figure 5. View of the numbering scheme until reaching the cell that corresponds to the last column and row.
Figure 6. View of the first sheet printing and its location on the table before the first cut.
Figure 7. View of the location of the already printed sheets.
Figure 8. Elevation or collected view of the sheets.
Figure 9. View of the first horizontal cut of the sheets.
Figure 10. View of the rows of joined pages. The right flap is the guide that allows lifting the groups without having to count them.
Figure 11. View of the sheets separated by columns (the flap indicates where the book ends).
Figure 12. View of the joining of the groups of pages to form a book.

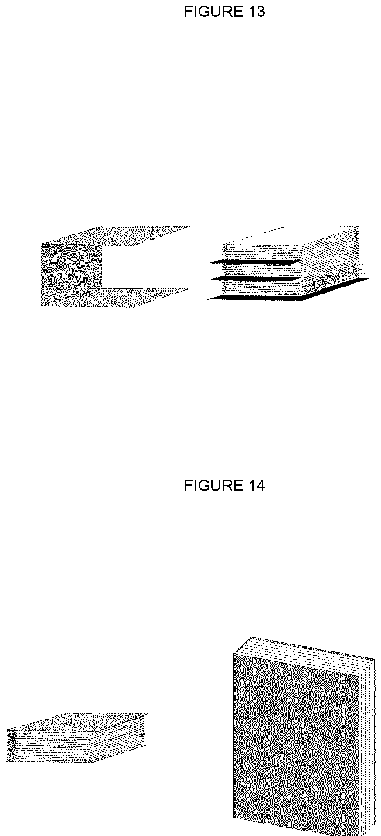

Figure 13. View the steps taken by the books to the gluing machine, hot glue is applied to hold the books, and they receive the cover.
Figure 14. View of the final cutting or trimming process of the books on the guillotine.

## Claims

1. Imposition method of books, magazines and similar on print for the graphic arts industry characterized because it includes the following steps:
• Printing capacity definition, where this step involves establishing the number of pages that the printer can print at the same time according to the size and capacity of said machine and the size of the book page.
• Determination of the number of sheets that must be printed to produce the book, where this step is realized dividing the number of pages of the book by the capacity.
• Elaboration of the model, where the last sheet has two flaps located in the length and width of the sheet.
• Structuring of the numerical matrix in the model, which includes: organizing each sheet of the model in a matrix with columns and rows, associating the pages numbering of the book with the cells outlined in the matrix, starting the numbering in the first sheet in the cell of the first column and first row, and where on the back of each cell, the page numbers that go to the back of the page should appear; where the numbering that starts in the first cell, of the first column, of the first sheet, continues in the first cell of the second sheet, and so on until the sheets are exhausted. Once finished the said sheet numbering, the consecutive numbering continues in the first sheet of the cell of the first column located in the second row, repeating the process; where once the numbers in all the cells of the first column are assigned, of all the sheets, it is proceeding in the same way with the cell of the first column, third row and continues in that same cell, sheet after sheet, until all the sheets are spent in the sequence shown in the specification and drawings of this application.
• First sheet printing, where said printing requires printing an additional printing from 5 to 10% of the total number of sheets.
• Second sheet printing, where said printing requires printing an additional printing from 5 to 10% of the total number of sheets.
• All sheets printing until finish them, where said printing requires printing an additional printing from 5 to 10% of the total number of sheets.
• All the sheets group's location, here the first pack of sheets is located on a table or flat surface, with page 1 of the first sheet is in the left top angle, and the rest of the sheet group's location is made in the said table or flat surface next to the first group of sheets.
• Sheets collection indicates the lift of the sheets in a manual, mechanical or electronic way, and its location on the top of the other at the end of the table or flat surface, in an inclined square, preferably vibratory.
• First sheets cut making.
• Cut rows joining.
• Necessary sheets cut making considering the capacity.
• Book formation and final refining, where the said step indicates that once the groups of pages are separated, they join to form a book, they are taken to the gluing machine that applies hot glue or any other gluing method to hold the books and receives the cover of each book, finally, the book packages go back to the guillotine to make the final cut or trim.

2. Imposition method of books, magazines and similar on print for the graphic arts industry according to claim 1, **characterized in that** the model making implies that all sheets to print have the same size, in exception of the last sheet that must have 2 flaps of 1cm each one preferably, located in width and height (FIG. 1), aligned with the machine registration.

3. Imposition method of books, magazines and similar on print for the graphic arts industry according to claim 1, **characterized in that** the model making implies to mark in all the sheets the position of the machine's gripper in the top of the model, in order that the registration of the printed sheets is the same.

4. Imposition method of books, magazines and similar on print for the graphic arts industry according to claim 1, **characterized in that** the matrix structuration in the model implies to organize each sheet of the model in a column and row matrix, depending on how many pages fit on the printing machine and whit having a limit of columns and rows.

5. Imposition method of books, magazines and similar on print for the graphic arts industry according to claim 1, 5 and 6, **characterized in that** the matrix structuration in the model implies that the order of the numbers associated to each cell is aligned to the guide, located in the top of the sheet.

6. Imposition method of books, magazines and similar on print for the graphic arts industry according to claim 1 and 5, **characterized in that** the matrix structuration in the model implies to associate the book pages numbering whit the outlined cells in the matrix, starting whit the numbering in the first sheet in the cell of the first column and the first row.

7. Imposition method of books, magazines and similar on print for the graphic arts industry according to claim 1, 5 and 6, **characterized in that** the matrix structuration in the model implies that in the back of each cell, should appear the page numbers on the back of the page.

8. Imposition method of books, magazines and similar on print for the graphic arts industry according to claim 1, 5 and 6, **characterized in that** the matrix structuration in the model implies that the numbering that starts in the first cell of the first column of the first sheet, continues in the first cell of the second sheet, and so on until spent all the sheets.

9. Imposition method of books, magazines and similar on print for the graphic arts industry according to claim 1, 5, 6 and 9, **characterized in that** the matrix structuration in the model implies that once finished these sheets numbering, it continues the consecutive numbering in the first sheet of the first column located in the second row, this process is repeated until the last sheet; in this way, all the numbers are spent until finishing the cells of the first column.

10. Imposition method of books, magazines and similar on print for the graphic arts industry according to claim 1, 5, 6, 9 and 10, **characterized in that** the matrix structuration in the model implies that one all the number assigned in all the cells of the first column, of all the sheets, it is proceeded in the same way with the cell of the second column, first row and continue **in that** same cell, sheet after sheet until spent the total of the sheets in the sequence that is shown; it continues until the cell that belongs to the last column, last row; it means, the last number has to be in the largest sheet, last cell.

11. Imposition method of books, magazines, and similar on print for the graphic arts industry according to claim 1, **characterized in that** once collected all the sheets, they are taken to the guillotine, paired with the registration of the sheet, where they are cut horizontally. One cut will separate the sheet letting like that the rows of the pages and the flaps on the right side.

12. Imposition method of books, magazines, and similar on print for the graphic arts industry according to claim 1, **characterized in that** the rows of the pages already cut must join together, when the established order in the numbering matrix, using the right flap as a guide that allows to lift the groups without counting them or seeing the image to know that the group of sheets is complete, taking into account the registration of the sheet; where the joining of the rows of the cut pages implies that the first group in the row join, with the second group in the row and so on until the end of the row groups, locating them in the square, considering the registration of the sheet.

13. Imposition method of books, magazines, and similar on print for the graphic arts industry according to claim 1, **characterized in that** second cut making implies that the material is taking again to the guillotine to separate the sheets by columns, identifying the respective flap to identify where the book ends, which in this case, is the bottom flap.
